# EUROPÄISCHE PATENTSCHRIFT

(11) **EP 2 125 962 B1**
(45) Veröffentlichungstag und Bekanntmachung des Hinweises auf die Patenterteilung: **22.05.2013**
(21) Anmeldenummer: 08701452.8
(22) Anmeldetag: 14.01.2008
(51) Int. Cl.: C09B 29/085, D06P 1/18

(54) **DISPERSIONSFARBSTOFFE, IHRE HERSTELLUNG UND IHRE VERWENDUNG**
DISPERSION DYE, THE PRODUCTION AND USE THEREOF
COLORANTS DE DISPERSION, LEUR PREPARATION ET LEUR UTILISATION

(30) Priorität: 23.01.2007 DE 102007003372
(43) Veröffentlichungstag der Anmeldung: 02.12.2009
(73) Patentinhaber: DyStar Colours Distribution GmbH, 65926 Frankfurt am Main (DE)
(72) Erfinder: JORDAN, Hartwig, 51467 Bergisch Gladbach (DE); NEUBAUER, Stefan, 50931 Köln (DE); LAWRENCE, Anthonny, Manchester Greater Manchester M21 9HQ (GB); HALL, Nigel, Bury Lancashire BL8 4DH (GB)
(86) Internationale Anmeldenummer: PCT/EP2008/050318
(87) Internationale Veröffentlichungsnummer: WO 2008/090042

(56) Entgegenhaltungen:
- JP-A- 48 096 621
- JP-A- 49 036 725
- JP-A- 54 029 331
- JP-A- 58 002 352

## Beschreibung

Gegenstand der vorliegenden Erfindung sind Dispersions-Azofarbstoffe, in denen bestimmte Estergruppen enthaltende Substituenten Ober einen Linker mit dem Chromophor verknüpft sind. Farbstoffe, die dieses Strukturelement aufweisen sind bereits bekannt und beispielsweise in GB 909843, WO95/20014 und WO05/056690 beschrieben. Auch Farbstoffe, in denen solche Estergruppen Ober einen Acylamino-Linker in ortho-Stellung zur Azobrücke mit dem Chromophor verknüpft sind, sind bekannt und in JP58-002352 beschrieben.

Es wurde nun gefunden, dass Dispersions-Azofarbstoffe, in denen solche bzw. ähnliche Strukturelemente in bestimmter Weise verknüpft sind, hervorragende Eigenschaften aufweisen und sich damit hergestellte Färbungen durch ausgezeichnete Waschechtheiten und sehr gute Sublimierechtheiten auszeichnen.

Die vorliegende Erfindung betrifft Farbstoffe der allgemeinen Formel (I) 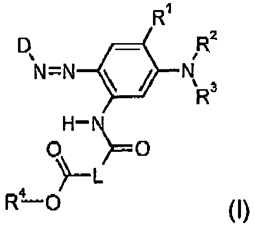 worin
- D: den Rest einer Diazokomponente bedeutet;
- R¹: Wasserstoff, (C₁-C₆)-Alkyl, (C₁-C₄)-Alkoxy oder Halogen bedeutet oder zusammen mit R² die Gruppe -*CH(CH₃)CH₂C(CH₃)₂- bildet, wobei das mit* bezeichnete Kohlenstoffatom an den Phenylkern gebunden ist;
- R² und R³: unabhängig voneinander Wasserstoff, (C₁-C₆)-Alkyl, substituiertes (C₁-C₆)-Alkyl, (C₃-C₄)-Alkenyl oder substituiertes (C₃-C₄)-Alkenyl bedeuten;
- R⁴: -CHR⁶COR⁷ oder -CH=CH₂ bedeutet;
- R⁶: Wasserstoff, (C₁-C₆)-Alkyl oder substituiertes (C₁-C₆)-Alkyl bedeutet;
- R⁷: (C₁-C₆)-Alkyl, substituiertes (C₁-C₆)-Alkyl, Vinyloxy, (C₁-C₆)-Alkoxy, substituiertes (C₁-C₆)-Alkoxy, Phenoxy, substituiertes Phenoxy, Phenyl oder substituiertes Phenyl bedeutet; und
- L: (C₂-C₆)-Alkylen, durch Sauerstoff unterbrochenes (C₂-C₆)-Alkylen, (C₂-C₆)-Alkenylen, Arylen oder substituiertes Arylen bedeutet;.

Für D stehende Reste einer Diazokomponente sind insbesondere die auf dem Gebiet der Dispersionsfarbstoffe üblichen und dem Fachmann bekannte Reste.

Bevorzugt steht D für
eine Gruppe der Formel (IIa) 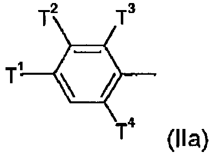 worin
T¹ und ^{T2} unabhängig voneinander Wasserstoff, (C₁-C₆)-Alkyl, (C₁-C₄)-Alkoxy, -SO₂-(C₁-C₆)-Alkyl, -SO₂-Aryl, Cyano, Halogen oder Nitro; und
T³ und T⁴ Wasserstoff, Halogen, Cyano, Trifluormethyl, -SCN, -SO₂CH₃ oder Nitro; bedeuten, wobei mindestens einer der Reste T¹, T², T³ und T⁴ nicht Wasserstoff bedeutet;
oder für eine Gruppe der Formel (IIb) 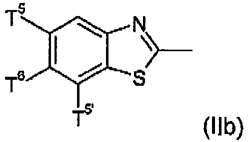 worin
T⁵ und T^{5'} unabhängig vonbeinander Wasserstoff, Nitro oder Halogen; und T⁶ Wasserstoff, -SO₂CH₃, -SCN, (C₁-C₄)-Alkoxy, Halogen oder Nitro; bedeuten, wobei mindestens einer der Reste T⁵, T^{5'} und T⁶ nicht Wasserstoff bedeutet;
oder für eine Gruppe der Formel (IIc) 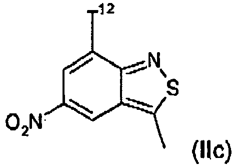 worin T¹² Wasserstoff oder Halogen bedeutet; oder für eine Gruppe der Formel (IId) 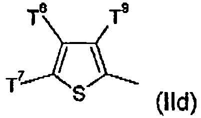 worin
T⁷ Nitro, -CHO, Cyano, -COCH₃ oder eine Gruppe der Formel 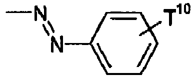 bedeutet, worin T¹⁰ Wasserstoff, Halogen, Nitro oder Cyano ist;
T^{B} Wasserstoff, (C₁-C₄)-Alkyl oder Halogen bedeutet; und
T⁹ Nitro, Cyano, -COCH₃ oder -COOT¹¹ bedeutet, worin T¹¹ (C₁-C₄)-Alkyl ist; oder für eine Gruppe der Formel (IIe) 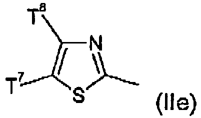 worin T⁷ und T⁸ wie oben angegeben definiert sind, oder für eine Gruppe der Formel (IIf) 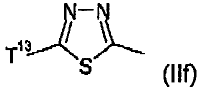 worin T¹³ Phenyl oder S-(C₁-C₄)-Alkyl bedeutet; oder für eine Gruppe der Formel (IIg) 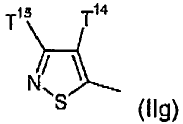 worin T¹⁴ Cyano oder -COCH₃ oder -COOT¹¹ bedeuten, worin T¹¹ (C₁-C₄)-Alkyl ist und T¹⁵ Phenyl oder (C₁-C₄)-Alkyl bedeutet;
oder für eine Gruppe der Formel (IIh) 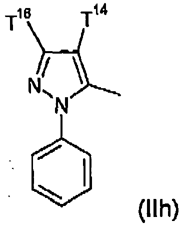 worin T¹⁴ wie oben angeben definiert ist und T¹⁶ für (C₁-C₄)-Alkyl steht; oder für eine Gruppe der Formel (IIi) 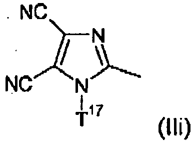 worin T¹⁷ Cyanomethyl, Benzyl oder Allyl bedeutet; oder für eine Gruppe der Formel (IIj) 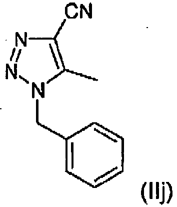 steht.

In den oben bzw. nachstehenden Definitionen genannte Alkyl-Gruppen können geradkettig oder verzweigt sein und bedeuten beispielsweise Methyl, Ethyl, n-Propyl, i-Propyl, n-Butyl, i-Butyl, tert.-Butyl, n-Pentyl oder n-Hexyl. Analoges gilt für Alkoxy und (C₂-C₆)-Alkylen. Durch Sauerstoff unterbrochenes (C₂-C₆)-Alkylen entspricht insbesondere der Formel -(CH₂)ₙ-O-(CH₂)ₘ-, worin n und m jeweils für eine Zahl von 1 bis 5 stehen und deren Summe eine Zahl von 2 bis 6 ist.

Sofern Alkyl-Gruppen substituiert sind, so sind sie insbesondere substituiert durch 1 bis 3 Substituenten aus der Reihe Halogen, Cyano, Hydroxy, (C₁-C₆)-Alkoxy, - COO(C₁-C₆)-Alkyl, -COOAryl, -OCOO(C₁-C₆)-Alkyl, -OCOOAryl, -OCO(C₁-C₆)-Alkyl, Phenyl, -OCOPhenyl und Phenoxy.

Alkenyl-Gruppen sind insbesondere Allyl. Substituierte Alkenylgruppen tragen insbesondere Substituenten aus der Reihe Methyl, Ethyl und Phenyl.

Arylgruppen sind insbesondere Phenyl und Naphthyl, Arylengruppen insbesondere Phenylen und Naphthylen. Sofern diese oder Phenoxygruppen substituiert sind, so tragen sie einen oder mehrere, insbesondere 1, 2 oder 3, Substituenten aus der Reihe Halogen, (C₁-C₄)-Alkyl, (C₁-C₄)-Alkoxy, Phenyl, Nitro, Cyano, Trifluormethyl und -SO₂-CH₃.

Halogen steht bevorzugt für Chlor oder Brom.

R¹ steht bevorzugt für Wasserstoff, Chlor, Methyl, Ethyl, Methoxy oder Ethoxy.

R² und R³ stehen unabhängig voneinander bevorzugt für Wasserstoff, Methyl, Ethyl, n-Propyl, n-Butyl, Cyanoethyl, -C₂H₄-OCOCH₃, -C₂H₄-OCOC₂H₅, -C₂H₄-COOCH₃, -C₂H₄-COOC₂H₅, Methoxyethyl, Ethoxyethyl, Phenoxyethyl, Phenethyl, Benzyl oder Allyl.

R⁶ steht besonders bevorzugt für Wasserstoff.

R⁷ steht bevorzugt für Methyl, Ethyl, Vinyloxy, Phenyl, Methoxy, Ethoxy, Propoxy, Benzyloxy oder Phenoxy.

L steht bevorzugt für Ethylen, Propylen, Butylen, Ethenylen, Butenylen, 1,3-Phenylen, 1,4-Phenylen oder -CH₂OCH₂-.

Bevorzugte erfindungsgemäße Farbstoffe entsprechen der allgemeinen Formel (Ia) 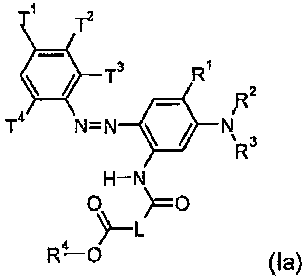 worin T¹ bis T⁴, R¹ bis R⁴ und L wie oben angegeben definiert sind.

Besonders bevorzugte erfindungsgemäße Farbstoffe dieses Typs entsprechen der allgemeinen Formel (Iaa) 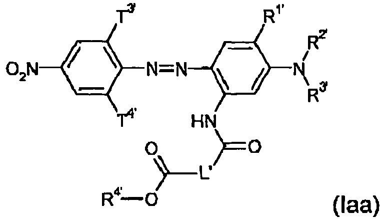 worin
T^{3'} für Wasserstoff, Cyano, Chlor oder Brom;
T^{4'} für Wasserstoff, Cyano, Nitro, Chlor oder Brom;
R^{1'} für Wasserstoff oder Methoxy;
R^{2'} für Wasserstoff, Ethyl, Allyl oder Methoxyethyl;
R^{3'} für Ethyl, Allyl, Methoxyethyl oder Cyanoethyl;
R^{4'} für -CH₂COR^{7'} oder -CH=CH₂;
R^{7'} für Methyl, Ethyl, Phenyl, Methoxy, Ethoxy oder Vinyloxy; und
L' für Ethylen, Propylen, Butylen, 1,3-Phenylen, 1,4-Phenylen oder -CH₂-O-CH₂-; stehen.

Weitere bevorzugte erfindungsgemäße Farbstoffe entsprechen der allgemeinen Formel (Ib) 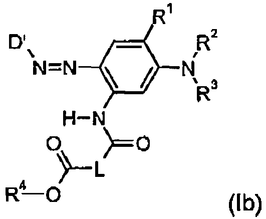 worin R¹ bis R⁴ und L wie oben angegeben definiert sind und D' für 3,5-Dicyan-4-chlorthienyl-2, 3,5-Dicyanthienyl-2, 3,5-Dicyan-4-methylthienyl-2, 3-Cyan-5-nitrothienyl-2, 3-Cyan-4-chlor-5-formylthienyl-2, 3,5-Dinitrothienyl-2, 3-Acetyl-5-nitrothienyl-2, 5-Acetyl-3-nitrothienyl-2, 3-((C₁-C₄)-Alkoxycarbonyl)-5-nitrothienyl-2, 5-Phenylazo-3-cyanthienyl-2, 5-(4-Nitrophenylazo)-3-cyanthienyl-2, 5-Nitrothiazoyl-2, 4-Chlor-5-formylthiazolyl-2-, 5-Nitrobenzisothiazolyl-3, 7-Brom-5-nitrobenzisothiazolyl-3, 7-Chlor-5-nitrobenzisothiazolyl-3, 3-Methyl-4-cyanisothiazolyl-5, 3-Phenyl-1,2,4-thiadiazolyl-2, 5-((C₁-C₂)-Alkylmercapto))-1,3,4-thiadiazolyl-2, 1-Cyanmethyl-4,5-dicyanimidazolyl-2, 6-Nitrobenz-thiazolyl-2, 5-Nitrobenzthiazolyl-2, 6-Rhodanbenzthiazolyl-2, 6-Chlorbenz-thiazolyl-2 oder
(5),6,(7)-Dichlorbenzthiazolyl-2 steht.

Die erfindungsgemäßen Farbstoffe der allgemeinen Formel (I) können mittels Methoden hergestellt werden, die dem Fachmann bekannt sind.

So wird beispielsweise eine Verbindung der allgemeinen Formel (III)

D-NH₂ (III)

worin D wie oben angegeben definiert ist, diazotiert und auf eine Verbindung der allgemeinen Formel (IV) 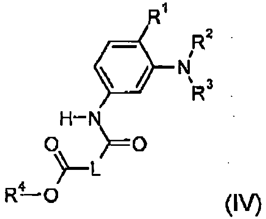 worin R¹ bis R⁴ und L wie oben angegeben definiert sind, gekuppelt.

Die Diazotierung der Verbindungen der allgemeinen Formel (III) erfolgt in der Regel in bekannter Weise, zum Beispiel mit Natriumnitrit in saurem, zum Beispiel salz- oder schwefelsaurem wässrigem Medium oder mit Nitrosylschwefelsäure in konzentrierter Schwefelsäure, Phosphorsäure oder in einem Gemisch aus Essig- und Propionsäure. Der bevorzugte Temperaturbereich liegt zwischen 0°C und 15°C.

Die Kupplung der diazotierten Verbindungen auf die Verbindungen der allgemeinen Formel (IV) erfolgt in der Regel ebenfalls in bekannter Weise, beispielsweise in saurem, wässrigem, wässrig-organischem oder organischem Medium, besonders vorteilhaft bei Temperaturen unter 10°C. Als Säuren verwendet man insbesondere Schwefelsäure, Essigsäure oder Propionsäure.

Die Verbindungen der allgemeinen Formeln (III) und (IV) sind bekannt und können nach bekannten Methoden hergestellt werden.

Die erfindungsgemäßen Farbstoffe der allgemeinen Formel (I) eignen sich in hervorragender Weise zum Färben und Bedrucken von hydrophoben Materialien, wobei sich die erhaltenen Färbungen und Drucke durch egale Farbtöne und hohe Gebrauchsechtheiten auszeichnen. Hervorzuheben sind ausgezeichnete Waschechtheiten und sehr gute Sublimierechtheiten.

Die vorliegende Erfindung betrifft somit auch die Verwendung der Farbstoffe der allgemeinen Formel I zum Färben und Bedrucken von hydrophoben Materialien bzw. Verfahren zum Färben oder Bedrucken solcher Materialien in an und für sich üblichen Verfahrensweisen, bei welchen man einen oder mehrere erfindungsgemäße Farbstoffe der allgemeinen Formel (I) als Farbmittel einsetzt.

Die genannten hydrophoben Materialien können synthetischen oder halbsynthetischen Ursprungs sein. Es kommen beispielsweise Cellulose-2½-acetat, Cellulosetriacetat, Polyamide, Polylactide und insbesondere hochmolekulare Polyester in Betracht. Materialien aus hochmolekularem Polyester sind insbesondere solche auf Basis von Polyethylenterephthalaten und Polytrimethylenterephthalaten. In Betracht kommen auch Mischgewebe und Mischfasern bestehend aus Polyester-Baumwolle oder Polyester-Elasthan.

Die hydrophoben synthetischen Materialien können in Form von Folien oder flächen- oder fadenförmigen Gebilden vorliegen und beispielsweise zu Garnen oder gewebten, gewirkten oder gestrickten Textilstoffen verarbeitet sein.

Bevorzugt sind faserförmige Textilmaterialien, die beispielsweise auch in Form von Mikrofasern vorliegen können.

Das Färben gemäß erfindungsgemäßer Verwendung kann in an sich bekannter Weise erfolgen, vorzugsweise aus wässriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird.

Das Bedrucken der genannten Materialien kann in an sich bekannter Weise so durchgeführt werden, dass die erfindungsgemäßen Farbstoffe der allgemeinen Formel (I) einer Druckpaste einverleibt werden und die damit bedruckte Ware zur Fixierung des Farbstoffes, gegebenenfalls in Gegenwart eines Carriers, bei Temperaturen zwischen 180 bis 230°C mit HT-Dampf, Druckdampf oder Trockenhitze behandelt wird.

Die erfindungsgemäßen Farbstoffe der allgemeinen Formel (I) sollen bei ihrer Anwendung in Färbeflotten, Klotzflotten oder Druckpasten in möglichst feiner Verteilung vorliegen.

Die Feinverteilung der Farbstoffe erfolgt in an sich bekannter Weise dadurch, dass man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, dass eine optimale spezifische Oberfläche erreicht wird und die Sedimentation des Farbstoffes möglichst gering ist. Dies geschieht in geeigneten Mühlen, wie Kugel- oder Sandmühlen. Die Teilchengröße der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind beispielsweise Umsetzungsprodukte von Alkylenoxiden, wie zum Beispiel Ethylen- oder Propylenoxid mit alkylierbaren Verbindungen, wie zum Beispiel Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungen gießbar sein. Der Farbstoff- und Dispergiermittelgehalt ist daher in diesen Fällen limitiert. Im allgemeinen werden die Dispersionen auf einen Farbstoffgehalt von bis zu 50 Gewichtsprozent und einen Dispergiermittelgehalt von bis zu etwa 25 Gewichtsprozent eingestellt. Aus ökonomischen Gründen werden Farbstoff-gehalte von 15 Gewichtsprozent meist nicht unterschritten.

Die Dispersionen können auch noch weitere Hilfsmittel enthalten, beispielsweise solche, die als Oxidationsmittel wirken, wie zum Beispiel Natrium-m-nitrobenzolsulfonat oder fungizide Mittel, wie zum Beispiel Natrium-o-phenyl-phenolat und Natriumpentachlorphenolat und insbesondere sogenannte "Säurespender", wie zum Beispiel Butyrolacton, Monochloracetamid, Natriumchloracetat, Natriumdichloracetat, das Na-Salz der 3-Chlorpropionsäure, Halbester der Schwefelsäure wie zum Beispiel Laurylsulfat, sowie Schwefelsäureester von oxethylierten und oxypropylierten Alkoholen, wie zum Beispiel Butylglykolsulfat.

Die so erhaltenen Farbstoffdispersionen können sehr vorteilhaft zum Ansatz von Färbeflotten und Druckpasten verwendet werden.

Für gewisse Anwendungsbereiche werden Pulvereinstellungen bevorzugt. Diese Pulver enthalten den Farbstoff, Dispergiermittel und andere Hilfsmittel, wie beispielsweise Netz-, Oxidations-, Konservierungs- und Entstaubungsmittel und die oben genannten "Säurespender".

Ein bevorzugtes Herstellungsverfahren für pulverförmige Farbstoffzubereitungen besteht darin, dass den oben beschriebenen flüssigen Farbstoffdispersionen die Flüssigkeit entzogen wird, zum Beispiel durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der oben beschriebenen Farbstoffeinstellungen mit dem Färbemedium, vorzugsweise mit Wasser, so weit verdünnt, dass sich für die Färbung ein Flottenverhältnis von 1:5 bis 1:50 ergibt Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise 4,5, eingestellt. Es ist vorteilhaft, den eingestellten pH-Wert abzupuffern und eine ausreichende Menge eines Puffersystems zuzusetzen. Ein vorteilhaftes Puffersystem ist zum Beispiel das System Essigsäure/Natriumacetat.

Soll der Farbstoff oder die Farbstoffmischung im Textildruck verwendet werden, so werden die erforderlichen Mengen der oben genannten Farbstoffeinstellungen in an sich bekannter Weise zusammen mit Verdickungsmitteln, wie zum Beispiel Alkali-Alginaten oder dergleichen, und gegebenenfalls weiteren Zusätzen, wie zum bespiel Fixierbeschleunigern, Netzmitteln und Oxidationsmitteln, zu Druckpasten verknetet,

Die vorliegende Erfindung betrifft auch Tinten für den digitalen Textildruck nach dem Ink-Jet Verfahren, die dadurch gekennzeichnet sind, dass sie einen erfindungsgemäßen Farbstoff der allgemeinen Formel (I) enthalten.

Die erfindungsgemäßen Tinten sind bevorzugt wässrig und enthalten einen oder mehrere der erfindungsgemäßen Farbstoffe der allgemeinen Formel (I), beispielsweise in Mengen von 0,1 bis 50 Gew.-%, bevorzugt in Mengen von 1 bis 30 Gew.-% und besonders bevorzugt in Mengen von 1 bis 15 Gew.-% bezogen auf das Gesamtgewicht der Tinte.

Daneben enthalten sie insbesondere von 0,1 bis 20 Gew.-% eines Dispergiermittels. Geeignete Dispergiermittel sind dem Fachmann bekannt, im Handel erhältlich und schließen beispielsweise sulfonierte oder sulfomethylierte Lignine, Kondensationsprodukte aus aromatischen Sulfonsäuren und Formaldehyd, Kondensationsprodukte aus gegebenenfalls substituiertem Phenol und Formaldehyd, Polyacrylate und entsprechende Copolymere, modifizierte Polyurethane und Umsetzungsprodukte von Alkylenoxiden mit alkylierbaren Verbindungen, wie beispielsweise Fettalkoholen, Fettaminen, Fettsäuren, Carbonsäureamiden und gegebenenfalls substituierten Phenolen ein.

Weiterhin können die erfindungsgemäßen Tinten die üblichen Zusatzstoffe enthalten, wie beispielsweise Viskositätsmoderatoren um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.

Als Viskositätsmoderatoren eignen sich rheologische Additive, wie beispielsweise Polyvinylcaprolactam, Polyvinylpyrrolidon sowie deren Co-Polymere, Polyetherpolyol, Assoziativ-Verdicker, Polyharnstoff, Natriumalginate, modifizierte Galaktomannane, Polyetherharnstoff, Polyurethan und nichtionogene Celluloseether.

Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.

Als oberflächenaktive Substanzen eignen sich beispielsweise Tenside aller Art, bevorzugt nichtionogene Tenside, Butyldiglykol und 1,2-Hexandiol.

Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die erfindungsgemäßen Tinten können in üblicher Weise durch Mischen der Komponenten in Wasser hergestellt werden.

### Beispiel 1

5.2 g 6-Brom-2,4-dinitroanilin werden bei 30 bis 35 °C in eine Mischung aus 9.8 ml Schwefelsäure (96%ig), 0.5 ml Wasser und 3.5 ml Nitrosylschwefelsäure (40%ig) eingetragen. Es wird 3 Stunden bei 30 - 35 °C nachgerührt und anschließend der Nitritüberschuß mit Amidosulfonsäure zerstört. Die so erhaltene Diazoniumsalzlösung wird zügig zu einer Mischung aus 6.4 g N-(3-Diethylaminophenyl)-succinylamido-2-oxopropylester, 50 ml Methanol und 200g Eis zugetropft. Es wird eine Stunde nachgerührt, abgesaugt, mit Wasser gewaschen und getrocknet. Man erhält 10.7 g N-[2-(2-Brom-4,6-dinitrophenylazo)-5-diethylaminophenyl]-succinylamido-2-oxo-propylester der Formel (lab) 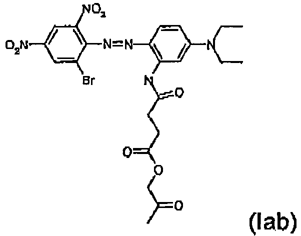 (λₘₐₓ[DMF] = 556 nm), der Polyester in violetten Tönen färbt und ausgezeichnete Wasch- und Sublimierechtheiten aufweist.

### Beispiel 2

5.9 g N-[2-(2-Brom-4,6-dinitrophenylazo)-5-diethylaminophenyl]-succinylamido-2-oxo-propylester (lab) und 0.9 g Kupfer(I)cyanid werden in 30 ml N-Methylpyrrolidon 4 Stunden lang bei 80 °C gerührt. Man lässt abkühlen und tropft 200 ml Methanol und 50 ml Wasser zum Ansatz. Der Niederschlag wird abgesaugt, mit 5%iger Salzsäure und Wasser gewaschen. Nach Trocknung im Vakuum erhält man 4.8 g des Farbstoffes der Formel (Iac) 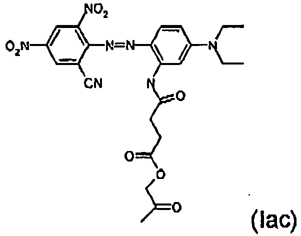 (λₘₐₓ [DMF] = 588 nm), der Polyester in brillianten, blauen Tönen färbt und ausgezeichnete Wasch- und Sublimierechtheiten aufweist.

### Beispiele 3 bis 98

Weitere nach obigem Verfahren herstellbare erfindungsgemäße Farbstoffe sind in Tabelle 1 angegeben.

**Tabelle 1**

| 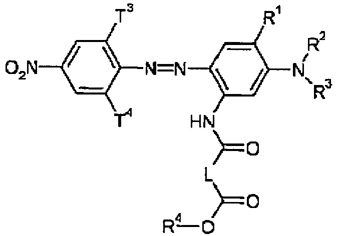 | | | | | | | | |
|---|---|---|---|---|---|---|---|---|
| Beispiel | T³ | T⁴ | R¹ | R⁴ | L | R² | R³ | λₘₐₓ *[DMF] [Aceton] |
| 3 | Br | CN | H | CH₂COC₆H₅ | C₂H₄ | C₂H₅ | C₂H₅ | *592 |
| 4 | Cl | NO₂ | H | CH₂COC₆H₅ | C₂H₄ | C₂H₅ | C₂H₅ | *566 |
| 5 | Br | NO₂ | H | CH₂COC₆H₅ | C₂H₄ | C₂H₅ | C₂H₅ | *556 |
| 6 | CN | CN | H | CH₂COCH₃ | C₂H₄ | C₂H₅ | C₂H₅ | *600 |
| 7 | Br | Br | H | CH₂COCH₃ | C₂H₄ | C₂H₅ | C₂H₅ | *468 |
| 8 | Cl | NO₂ | H | CH₂COCH₃ | C₂H₄ | C₂H₅ | C₂H₅ | *566 |
| 9 | Br | CN | H | CH₂COCH₃ | C₂H₄ | C₂H₅ | C₂H₅ | *590 |
| 10 | Cl | H | H | CH₂COCH₃ | C₂H₄ | C₂H₅ | C₂H₅ | *540 |
| 11 | Cl | NO₂ | OCH₃ | CH₂COC₆H₅ | C₂H₄ | C₂H₅ | C₂H₅ | *616 |
| 12 | Br | NO₂ | OCH₃ | CH₂COC₆H₅ | C₂H₄ | C₂H₅ | C₂H₅ | *616 |
| 13 | H | NO₂ | OCH₃ | CH₂COC₆H₅ | C₂H₄ | C₂H₅ | C₂H₅ | *596 |
| 14 | CN | Br | OCH₃ | CH₂COC₆H₅ | C₂H₄ | C₂H₅ | C₂H₅ | *644 |
| 15 | Cl | NO₂ | OCH₃ | CH₂COCH₃ | C₂H₄ | C₂H₅ | C₂H₅ | *616 |
| 16 | Br | NO₂ | OCH₃ | CH₂COCH₃ | C₂H₄ | C₂H₅ | C₂H₅ | *616 |
| 17 | H | NO₂ | OCH₃ | CH₂COCH₃ | C₂H₄ | C₂H₅ | C₂H₅ | *594 |
| 18 | CN | Br | OCH₃ | CN₂COCH₃ | C₂H₄ | C₂H₅ | C₂H₅ | *644 |
| 19 | Br | NO₂ | H | CH₂COCH₃ | C₃H₆ | C₂H₅ | C₂H₅ | *558 |
| 20 | Cl | NO₂ | OCH₃ | CH₂COCH₃ | C₃H₆ | C₂H₅ | C₂H₅ | *616 |
| 21 | Br | NO₂ | OCH₃ | CH₂COCH₃ | C₃H₆ | C₂H₅ | C₂H₅ | *616 |
| 22 | H | NO₂ | OCH₃ | CH₂COCH₃ | C₃H₆ | C₂H₅ | C₂H₅ | *596 |
| 23 | Cl | NO₂ | OCH₃ | CH₂COCH₂CH₃ | C₃H₆ | C₂H₅ | C₂H₅ | *616 |
| 24 | H | NO₂ | OCH₃ | CH₂COCH₂CH₃ | C₃H₆ | C₂H₅ | C₂H₅ | *596 |
| 25 | CN | Br | OCH₃ | CH₂COCH₃ | C₃H₆ | C₂H₅ | C₂H₅ | *644 |
| 26 | Cl | NO₂ | OCH₃ | CH₂COCH₃ | CH₂OCH₂ | C₂H₅ | C₂H₅ | *614 |
| 27 | Br | NO₂ | OCH₃ | CH₂COCH₃ | CH₂OCH₂ | C₂H₅ | C₂H₅ | *612 |
| 28 | H | NO₂ | OCH₃ | CH₂COCH₃ | CH₂OCH₂ | C₂H₅ | C₂H₅ | *594 |
| 29 | Br | NO₂ | H | CH₂COCH₃ | CH₂OCH₂ | C₂H₅ | C₂H₅ | *556 |
| 34 | Br | NO₂ | OCH₃ | CH₂COOCH₃ | C₃H₆ | C₂H₅ | C₂H₅ | 616 |
| 35 | Br | NO₂ | OCH₃ | CH₂COOCH₃ | C₃H₆ | H | C₂H₄CN | 582 |
| 73 | CN | H | H | CH₂COOCH₃ | C₃H₆ | C₂H₅ | C₂H₄CN | 540 |
| 74 | Cl | H | H | CH₂COOCH₃ | C₃H₆ | C₂H₅ | C₂H₄CN | 524 |
| 75 | Cl | Cl | H | CH₂COOCH₃ | C₃H₆ | C₂H₅ | C₂H₄CN | 464 |
| 76 | Br | NO₂ | H | CH₂COOCH₃ | C₃H₆ | C₂H₅ | C₂H₆ | 556 |
| 77 | H | NO₂ | OCH₃ | CH₂COOCH=CH₂ | C₂H₄ | C₂H₅ | C₂H₆ | *594 |
| 78 | Br | NO₂ | OCH₃ | CH₂COOCH=CH₂ | C₂H₄ | C₂H₅ | C₂H₅ | *614 |
| 79 | Cl | NO₂ | OCH₃ | CH₂COOCH=CH₂ | C₂H₄ | C₂H₅ | C₂H₅ | *616 |
| 80 | H | NO₂ | OCH₃ | CH₂COOCH=CH₂ | C₃H₆ | C₂H₅ | C₂H₅ | *596 |
| 81 | Br | NO₂ | OCH₃ | CH₂COOCH=CH₂ | C₃H₆ | C₂H₅ | C₂H₅ | *616 |
| 82 | Cl | NO₂ | OCH₃ | CH₂COOCH=CH₂ | C₃H₆ | C₂H₅ | C₂H₅ | *616 |
| 83 | H | NO₂ | OCH₃ | CH=CH₂ | C₂H₄ | C₂H₅ | C₂H₅ | *594 |
| 84 | Br | NO₂ | OCH₃ | CH=CH₂ | C₂H₄ | C₂H₅ | C₂H₅ | *614 |
| 85 | Cl | NO₂ | OCH₃ | CH=CH₂ | C₂H₄ | C₂H₅ | C₂H₅ | *616 |
| 86 | H | NO₂ | OCH₃ | CH=CH₂ | C₃H₆ | C₂H₅ | C₂H₅ | *596 |
| 87 | Br | NO₂ | OCH₃ | CH=CH₂ | C₃H₆ | C₂H₅ | C₂H₅ | *616 |
| 88 | Cl | NO₂ | OCH₃ | CH=CH₂ | C₃H₆ | C₂H₅ | C₂H₅ | *616 |
| 96 | Cl | NO₂ | H | CH₂COCH₃ | 1,3-Phenylen | C₂H₅ | C₂H₅ | 560 |
| 97 | Cl | NO₂ | OCH₃ | CH₂COCH₃ | 1,3-Phenylen | C₂H₅ | C₂H₅ | 605 |

### Beispiele 100 bis 104

Weitere nach obigem Verfahren herstellbare erfindungsgemäße Farbstoffe sind in Tabelle 2 angegeben.

**Tabelle 2**

| 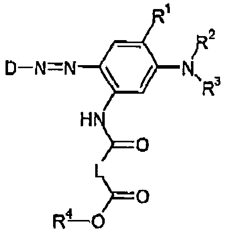 | | | | | | | |
|---|---|---|---|---|---|---|---|
| Beispiel | D | R ¹ | R² | R³ | R⁴ | L | λₘₐₓ [Aceton] |
| 100 | 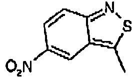 | H | CH₂CH₃ | CH₂CH₃ | CH=CH₂ | C₂H₄ | 617 |
| 101 | 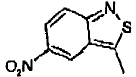 | H | CH₂CH₃ | CH₂CH₃ | CH₂COCH₃ | C₂H₄ | 617 |

### Beispiel 105

Ein textiles Flächengebilde, bestehend aus Polyester wird mit einer Flotte bestehend aus 50g/l einer 8%igen Natriumalginatlösung, 100 g/l einer 8-12%igen Kemmehretherlösung und 5g/l Mononatriumphosphat in Wasser foulardiert und dann getrocknet. Die Flottenaufnahme beträgt 70%.

Auf das so vorbehandelte Textil wird eine nach oben beschriebener Vorgehenswelse hergestellte wässrige Tinte, enthaltend
3,5% des Farbstoffes gemäß Beispiel 1,
2,5% Dispergiermittel Disperbyk 190,
30% 1,5-Pentandiol,
5% Diethylenglykolmonomethylether,
0,01 % Biozid Mergal K9N und
58,99% Wasser
mit einem Drop-on-Demand (Piezo) Inkjet Druckkopf aufgedruckt. Der Druck wird vollstandig getrocknet. Die Fixierung erfolgt mittels überhitzten Dampfes bei 175 °C während 7 Minuten. Anschließend wird der Druck einer alkalisch reduktiven Nachbehandlung unterzogen, warm gespült und dann getrocknet.

## Patentansprüche

1. Farbstoff der allgemeinen Formel (I) 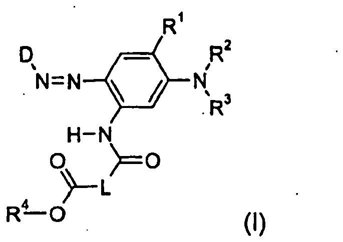 worin
D den Rest einer Diazokomponente bedeutet;
R¹ Wasserstoff, (C₁-C₆)-Alkyl, (C₁-C₄)-Alkoxy oder Halogen bedeutet oder zusammen mit R² die Gruppe -*CH(CH₃)CH₂C(CH₃)₂- bildet, wobei das mit* bezeichnete Kohlenstoffatom an den Phenylkern gebunden ist;
R² und R³ unabhängig voneinander Wasserstoff, (C₁-C₆)-Alkyl, substituiertes (C₁-C₆)-Alkyl, (C₃-C₄)-Alkenyl oder substituiertes (C₃-C₄)-Alkenyl bedeuten;
R⁴ -CHR⁶COR⁷ oder -CH=CH₂ bedeutet;
R⁶ Wasserstoff, (C₁-C₆)-Alkyl oder substituiertes (C₁-C₆)-Alkyl bedeutet;
R⁷ (C₁-C₆)-Alkyl, substituiertes (C₁-C₆)-Alkyl, Vinyloxy, (C₁-C₆)-Alkoxy, substituiertes (C₁-C₆)-Alkoxy, Phenoxy, substituiertes Phenoxy, Phenyl oder substituiertes Phenyl bedeutet; und
L (C₂-C₆)-Alkylen, durch Sauerstoff unterbrochenes (C₂-C₆)-Alkylen, (C₂-C₆)-Alkenylen, Arylen oder substituiertes Arylen bedeutet.

2. Farbstoff gemäß Anspruch 1, **dadurch gekennzeichnet, dass** D eine Gruppe der Formel (IIa) 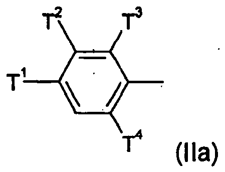 worin
T¹ und T² unabhängig voneinander Wasserstoff, (C₁-C₆)-Alkyl, (C₁-C₄)-Alkoxy, -SO₂-(C₁-C₆)-Alkyl, -SO₂-Aryl, Cyano, Halogen oder Nitro; und
T³ und T⁴ Wasserstoff, Halogen, Cyano, Trifluormethyl, -SCN, -SO₂CH₃ oder Nitro;
bedeuten, wobei mindestens einer der Reste T¹, T², T³ und T⁴ nicht Wasserstoff bedeutet;
oder für eine Gruppe der Formel (IIb) 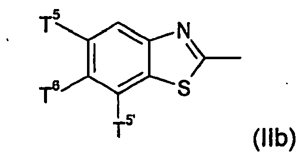 worin
T⁵ und T^{5'} unabhängig vonbeinander Wasserstoff, Nitro oder Halogen; und
T⁶ Wasserstoff, -SO₂CH₃, -SCN, (C₁-C₄)-Alkoxy, Halogen oder Nitro; bedeuten, wobei mindestens einer der Reste T⁵, T^{5'} und T⁶ nicht Wasserstoff bedeutet;
oder für eine Gruppe der Formel (IIc) 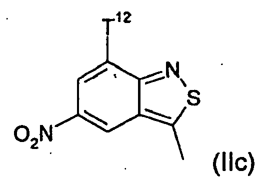 worin T¹² Wasserstoff oder Halogen bedeutet; oder für eine Gruppe der Formel (IId) 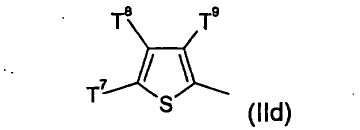 worin
T⁷ Nitro, -CHO, Cyano, -COCH₃ oder eine Gruppe der Formel 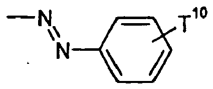 bedeutet, worin T¹⁰ Wasserstoff, Halogen, Nitro oder Cyano ist;
T⁸ Wasserstoff, (C₁-C₄)-Alkyl oder Halogen bedeutet; und
T⁹ Nitro, Cyano, -COCH₃ oder -COOT¹¹ bedeutet, worin T¹¹ (C₁-C₄)-Alkyl ist; oder für eine Gruppe der Formel (IIe) 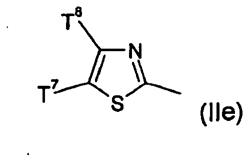 worin T⁷ und T⁸ wie oben angegeben definiert sind, oder für eine Gruppe der Formel (IIf) 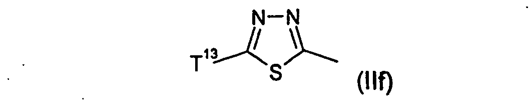 worin T¹³ Phenyl oder S-(C₁-C₄)-Alkyl bedeutet; oder für eine Gruppe der Formel (IIg) 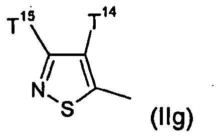 worin T¹⁴ Cyano oder -COCH₃ oder -COOT¹¹ bedeuten, worin T¹¹ (C₁-C₄)-Alkyl ist und T¹⁵ Phenyl oder (C₁-C₄)-Alkyl bedeutet;
oder für eine Gruppe der Formel (IIh) 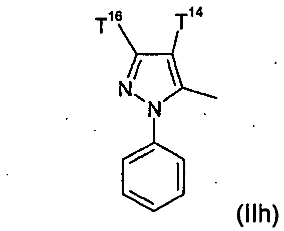 worin T¹⁴ wie oben angeben definiert ist und T¹⁶ für (C₁-C₄)-Alkyl steht; oder für eine Gruppe der Formel (IIi) 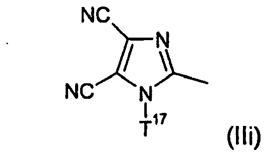 worin T¹⁷ Cyanomethyl, Benzyl oder Allyl bedeutet;
oder für eine Gruppe der Formel (IIj) 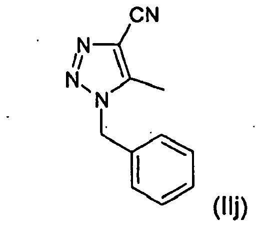 steht.

3. Farbstoff gemäß Anspruch 1 und/oder 2, **dadurch gekennzeichnet, dass** R¹ für Wasserstoff, Chlor, Methyl, Ethyl, Methoxy oder Ethoxy;
R² und R³ unabhängig voneinander für Wasserstoff, Methyl, Ethyl, n-Propyl, n-Butyl, Cyanoethyl, -C₂H₄OCOCH₃, -C₂H₄OCOC₂H₄, -C₂H₄COOCH₃, -C₂H₄COOC₂H₅, Methoxyethyl, Ethoxyethyl, Phenoxyethyl, Phenethyl, Benzyl oder Allyl;
R⁶ für Wasserstoff;
R⁷ für Methyl, Ethyl, Phenyl, Methoxy, Ethoxy, Propoxy, Vinyloxy, Benzyloxy oder Phenoxy; und
L für Ethylen, Propylen, Butylen, Ethenylen, Butenylen, 1,3-Phenylen, 1,4-Phenylen oder -CH₂OCH₂-;
stehen.

4. Farbstoff gemäß Anspruch 1 und/oder 2, **dadurch gekennzeichnet, dass** er der allgemeinen Formel (la) 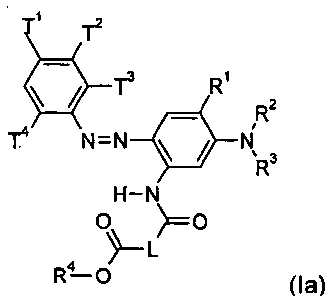 entspricht, worin T¹ bis T⁴, R¹ bis R⁴ und L wie in Anspruch 1 angegeben definiert sind.

5. Farbstoff gemäß Anspruch 4, **dadurch gekennzeichnet, dass** er der allgemeinen Formel (Iaa) 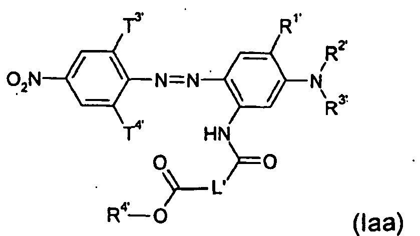 entspricht, worin T^{3'} für Wasserstoff, Cyano, Chlor oder Brom;
T^{4'} für Wasserstoff, Cyano, Nitro, Chlor oder Brom;
R^{1'} für Wasserstoff oder Methoxy;
R^{2'} für Wasserstoff, Ethyl, Allyl oder Methoxyethyl;
R^{3'} für Ethyl, Allyl, Methoxyethyl oder Cyanoethyl;
R^{4'} für -CH₂COR^{7'} oder -CH=CH₂;
R^{7'} für Methyl, Ethyl, Phenyl, Methoxy, Ethoxy oder Vinyloxy; und
L' für Ethylen, Propylen, Butylen, 1,3-Phenylen, 1,4-Phenylen oder -CH₂-O-CH₂-;
stehen.

6. Farbstoff gemäß Anspruch 1 und/oder 2, **dadurch gekennzeichnet, dass** er der der allgemeinen Formel (Ib) 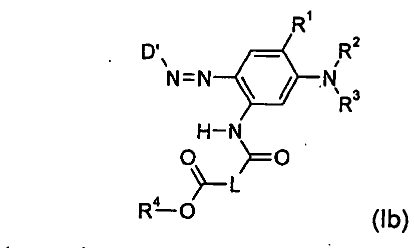 entspricht, worin R¹ bis R⁴ und L wie in Anspruch 1 angegeben definiert sind und D' für 3,5-Dicyan-4-chlorthienyl-2, 3,5-Dicyanthienyl-2, 3,5-Dicyan-4-methylthienyl-2, 3-Cyan-5-nitrothienyl-2, 3-Cyan-4-chlor-5-formylthienyl-2, 3,5-Dinitrothienyl-2, 3-Acetyl-5-nitrothienyl-2, 5-Acetyl-3-nitrothienyl-2, 3-((C₁-C₄)-Alkoxycarbonyl)-5-nitrothienyl-2, 5-Phenylazo-3-cyanthienyl-2, 5-(4-Nitrophenylazo)-3-cyanthienyl-2, 5-Nitrothiazoyl-2, 4-Chlor-5-formylthiazolyl-2-, 5-Nitrobenzisothiazolyl-3, 7-Brom-5-nitrobenziso-thiazolyl-3, 7-Chlor-5-nitrobenzisothiazolyl-3, 3-Methyl-4-cyanisothiazolyl-5, 3-Phenyl-1,2,4-thiadiazolyl-2, 5-((C₁-C₂)-Alkylmercapto))-1,3,4-thiadiazolyl-2, 1-Cyanmethyl-4,5-dicyanimidazolyl-2, 6-Nitrobenz-thiazolyl-2, 5-Nitrobenzthiazolyl-2, 6-Rhodanbenzthiazolyl-2, 6-Chlorbenz-thiazolyl-2 oder (5),6,(7)-Dichlorbenzthiazolyl-2 steht.

7. Verfahren zur Herstellung eines Farbstoffes der allgemeinen Formel (I) gemäß Anspruch 1, **dadurch gekennzeichnet, dass** man eine Verbindung der allgemeinen Formel (III)
D-NH₂ (III)
worin D wie in Anspruch 1 angegeben definiert ist, diazotiert und auf eine Verbindung der allgemeinen Formel (IV) 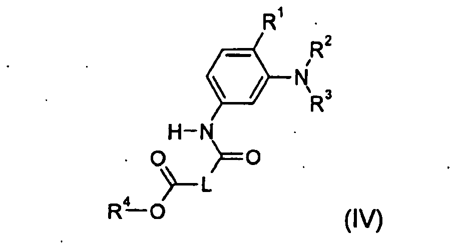 worin R¹ bis R⁴ und L wie in Anspruch 1 angegeben definiert sind, kuppelt.

8. Verwendung eines Farbstoffes der allgemeinen Formel I gemäß Anspruch 1 zum Färben und Bedrucken von hydrophoben Materialien.

9. Tinte für den digitalen Textildruck nach dem Ink-Jet Verfahren, **dadurch gekennzeichnet, dass** sie einen Farbstoff der allgemeinen Formel (I) gemäß Anspruch 1 enthält

## Claims

1. A dye of the general formula (I) 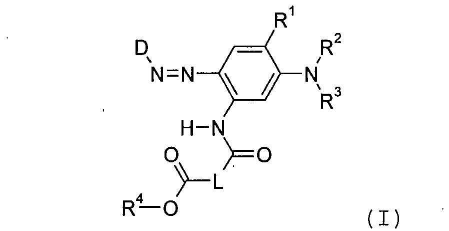 where
D is the residue of a diazo component;
R¹ is hydrogen, (C₁-C₆)-alkyl, (C₁-C₄)-alkoxy or halogen or combines with R² to form the group -*CH(CH₃)CH₂C(CH₃)₂-, where the carbon atom marked by * is attached to the phenyl nucleus;
R² and R³ independently are hydrogen, (C₁-C₆)-alkyl, substituted (C₁-C₆)-alkyl, (C₃-C₄)-alkenyl or substituted (C₃-C₄)-alkenyl;
R⁴ is -CHR⁶COR⁷ or -CH=CH₂;
R⁶ is hydrogen, (C₁-C₆)-alkyl or substituted (C₁-C₆)-alkyl;
R⁷ is (C₁-C₆)-alkyl, substituted (C₁-C₆)-alkyl, vinyloxy, (C₁-C₆)-alkoxy, substituted (C₁-C₆)-alkoxy, phenoxy, substituted phenoxy, phenyl or substituted phenyl; and
L is (C₂-C₆)-alkylene, oxygen-interrupted (C₂-C₆)-alkylene, (C₂-C₆)-alkenylene, arylene or substituted arylene.

2. A dye as claimed in claim 1, wherein D represents a group of the formula (IIa) 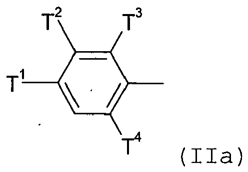 where
T¹ and T² independently are hydrogen, (C₁-C₆)-alkyl, (C₁-C₄)-alkoxy, -SO₂-(C₁-C₆)-alkyl, -SO₂-aryl, cyano, halogen or nitro; and
T³ and T⁴ are hydrogen, halogen, cyano, trifluoromethyl, -SCN, -SO₂CH₃ or nitro;
although at least one of T¹, T², T³ and T⁴ is not hydrogen;
or represents a group of the formula (IIb) 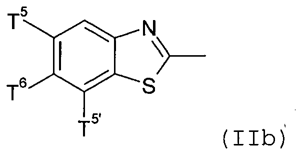 where
T⁵ and T^{5'}, independently are hydrogen, nitro or halogen; and
T⁶ is hydrogen, -SO₂CH₃, -SCN, (C₁-C₄)-alkoxy, halogen or nitro;
although at least one of T⁵, T^{5'} and T⁶ is not hydrogen; or represents a group of the formula (IIc) 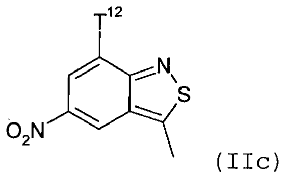 where T¹² is hydrogen or halogen;
or represents a group of the formula (IId) 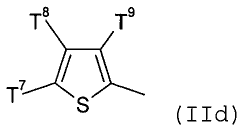 where
T⁷ is nitro, -CHO, cyano, -COCH₃ or a group of the formula 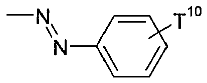 where T¹⁰ is hydrogen, halogen, nitro or cyano;
T⁸ is hydrogen, (C₁-C₄)-alkyl or halogen; and
T⁹ is nitro, cyano, -COCH₃ or -COOT¹¹, where T¹¹ is (C₁-C₄)-alkyl;
or represents a group of the formula (IIe) 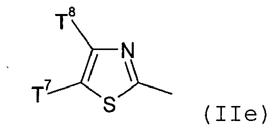 where T⁷ and T⁸ are each as defined above, or represents a group of the formula (IIf) 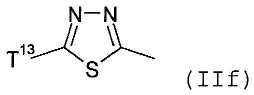 where T¹³ is phenyl or S-(C₁-C₄)-alkyl;
or represents a group of the formula (IIg) 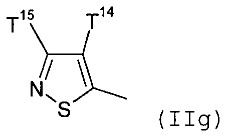 where T¹⁴ is cyano, -COCH₃ or -COOT¹¹, where T¹¹ is (C₁-C₄)-alkyl and T¹⁵ is phenyl or (C₁-C₄)-alkyl;
or represents a group of the formula (IIh) 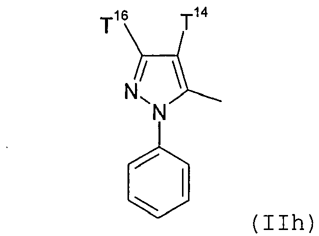 where T¹⁴ is as defined above and T¹⁶ is (C₁-C₄)-alkyl; or represents a group of the formula (IIi) 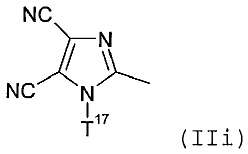 where T¹⁷ is cyanomethyl, benzyl or allyl; or represents a group of the formula (IIj)

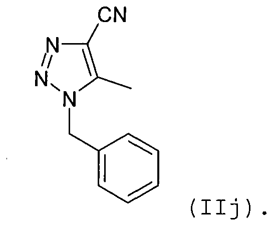

3. A dye as claimed in claim 1 and/or 2, wherein
R¹ is hydrogen, chlorine, methyl, ethyl, methoxy or ethoxy;
R² and R³ independently are hydrogen, methyl, ethyl, n-propyl, n-butyl, cyanoethyl, -C₂H₄OCOCH₃, -C₂H₄OCOC₂H₄, - C₂H₄COOCH₃, -C₂H₄COOC₂H₅, methoxyethyl, ethoxyethyl, phenoxyethyl, phenethyl, benzyl or allyl;
R⁶ is hydrogen;
R⁷ is methyl, ethyl, phenyl, methoxy, ethoxy, propoxy, vinyloxy, benzyloxy or phenoxy; and
L is ethylene, propylene, butylene, ethenylene, butenylene, 1,3-phenylene, 1,4-phenylene or -CH₂OCH₂-.

4. A dye as claimed in claim 1 and/or 2, conforming to the general formula (Ia) 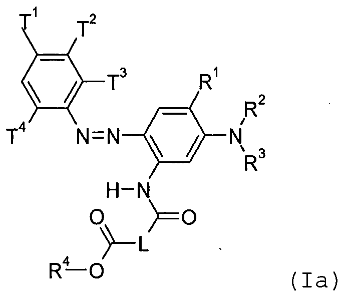 where T¹ to T⁴, R¹ to R⁴ and L are each as defined in claim 1.

5. A dye as claimed in claim 4, conforming to the general formula (Iaa) 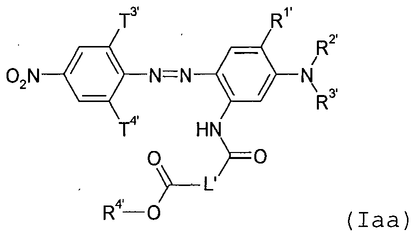 where
T^{3'} is hydrogen, cyano, chlorine or bromine;
T^{4'} is hydrogen, cyano, nitro, chlorine or bromine;
R^{1'} is hydrogen or methoxy;
R^{2'} is hydrogen, ethyl, allyl or methoxyethyl;
R^{3'} is ethyl, allyl, methoxyethyl or cyanoethyl;
R^{4'} is -CH₂COR^{7'} or -CH=CH₂;
R^{7'} is methyl, ethyl, phenyl, methoxy, ethoxy or vinyloxy; and
L' is ethylene, propylene, butylene, 1,3-phenylene, 1,4-phenylene or -CH₂-O-CH₂-.

6. A dye as claimed in claim 1 and/or 2, conforming to the general formula (Ib) 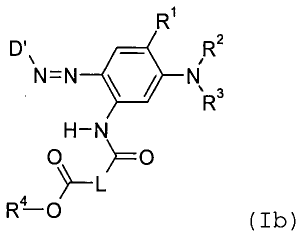 where R¹ to R⁴ and L are each as defined in claim 1 and D' represents 3,5-dicyano-4-chloro-2-thienyl, 3,5-dicyano-2-thienyl, 3,5-dicyano-4-methyl-2-thienyl, 3-cyano-5-nitro-2-thienyl, 3-cyano-4-chloro-5-formyl-2-thienyl, 3,5-dinitro-2-thienyl, 3-acetyl-5-nitro-2-thienyl, 5-acetyl-3-nitro-2-thienyl, 3-((C₁-C₄)-alkoxycarbonyl)-5-nitro-2-thienyl, 5-phenylazo-3-cyano-2-thienyl, 5-(4-nitrophenylazo)-3-cyano-2-thienyl, 5-nitro-2-thiazoyl, 4-chloro-5-formyl-2-thiazolyl, 5-nitro-3-benzisothiazolyl, 7-bromo-5-nitro-3-benzisothiazolyl, 7-chloro-5-nitro-3-benzisothiazolyl, 3-methyl-4-cyano-5-isothiazolyl, 3-phenyl-1,2,4-thiadiazol-2-yl, 5-((C₁-C₂)-alkylmercapto))-1,3,4-thiadiazol-2-yl, 1-cyanomethyl-4,5-dicyano-2-imidazolyl, 6-nitrobenzothiazol-2-yl, 5-nitrobenzothiazol-2-yl, 6-rhodan-2-benzothiazolyl, 6-chloro-2-benzothiazolyl or (5),6,(7)-dichloro-2-benzothiazolyl.

7. A process for preparing a dye of the general formula (I) as claimed in claim 1, which comprises a compound of the general formula (III)
D-NH₂ (III)
where D is as defined in claim 1, being diazotized and coupled onto a compound of the general formula (IV) 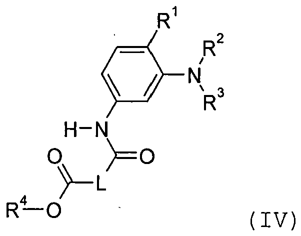 where R¹ to R⁴ and L are each as defined in claim 1.

8. The use of a dye of the general formula I as claimed in claim 1 for dyeing and printing hydrophobic materials.

9. An ink for digital textile printing by the ink jet process, comprising a dye of the general formula (I) as claimed in claim 1.

## Revendications

1. Colorant de formule générale (I) 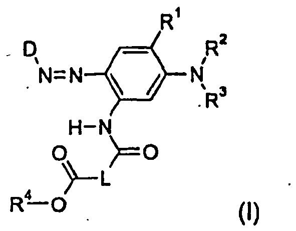 où
D signifie le radical d'un composant diazo ;
R¹ signifie hydrogène, (C₁-C₆)-alkyle, (C₁-C₄) -alcoxy ou halogène ou forme, ensemble avec R², le groupe - *CH(CH₃)CH₂C(CH₃)₂-, l'atome de carbone désigné par * étant lié au noyau phényle ;
R² et R³ signifient, indépendamment l'un de l'autre, hydrogène, (C₁-C₆)-alkyle, (C₁-C₆)-alkyle substitué, (C₃-C₄)-alcényle ou (C₃-C₄)-alcényle substitué ;
R⁴ signifie -CHR⁶COR⁷ ou -CH=CH₂ ;
R⁶ signifie hydrogène, (C₁-C₆)-alkyle ou (C₁-C₆)-alkyle substitué ;
R⁷ signifie (C₁-C₆)-alkyle, (C₁-C₆)-alkyle substitué, vinyloxy, (C₁-C₆)-alcoxy, (C₁-C₆)-alcoxy substitué, phénoxy, phénoxy substitué, phényle ou phényle substitué ; et
L signifie (C₂-C₆)-alkylène, (C₂-C₆)-alkylène interrompu par oxygène, (C₂-C₆)-alcénylène, arylène ou arylène substitué.

2. Colorant selon la revendication 1, **caractérisé en ce que** D signifie un groupe de formule (IIa) 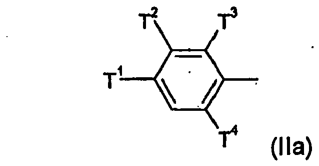 où
T¹ et T² signifient, indépendamment l'un de l'autre, hydrogène, (C₁-C₆)-alkyle, (C₁-C₄)-alcoxy, -SO₂-(C₁-C₆)-alkyle, -SO₂-aryle, cyano, halogène ou nitro ; et
T³ et T⁴ signifient hydrogène, halogène, cyano, trifluorométhyle, -SCN, -SO₂CH₃ ou nitro ; au moins un des radicaux T¹, T², T³ et T⁴ ne signifiant pas hydrogène ;
ou un groupe de formule (IIb) 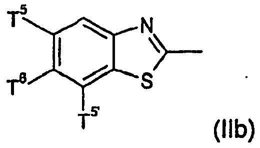 où
T⁵ et T^{5'} signifient, indépendamment l'un de l'autre, hydrogène, nitro ou halogène ; et
T⁶ signifie hydrogène, -SO₂CH₃, -SCN, (C₁-C₄)-alcoxy, halogène ou nitro ; au moins un des radicaux T⁵, T^{5'} et T⁶ ne signifiant pas hydrogène ;
ou un groupe de formule (IIc) 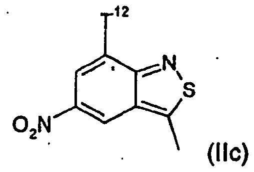 où T¹² signifie hydrogène ou halogène ; ou un groupe de formule (IId) 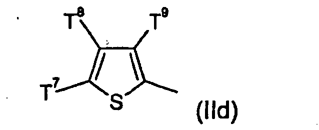 où T⁷ signifie nitro, -CHO, cyano, -COCH₃ ou un groupe de formule 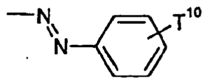 où
T¹⁰ signifie hydrogène, halogène, nitro ou cyano ;
T⁸ signifie hydrogène, (C₁-C₄)-alkyle ou halogène ; et
T⁹ signifie nitro, cyano, -COCH₃ ou -COOT¹¹, où T¹¹ représente (C₁-C₄)-alkyle ; ou un groupe de formule (IIe) 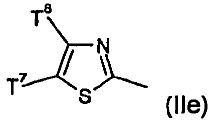
où T⁷ et T⁸ sont définis comme indiqué ci-dessus, ou un groupe de formule (IIf) 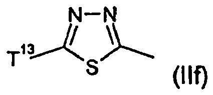 où T¹³ signifie phényle ou S-(C₁-C₄)-alkyle ; ou un groupe de formule (IIg) 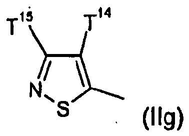 où T¹⁴ signifie cyano ou -COCH₃ ou -COOT¹¹, où T¹¹ représente (C₁-C₄)-alkyle et T¹⁵ signifie phényle ou (C₁-C₄)-alkyle ;
ou un groupe de formule (IIh) 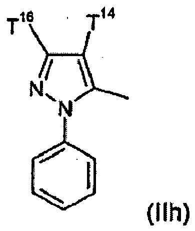 où T¹⁴ est défini comme indiqué ci-dessus et T¹⁶ représente (C₁-C₄)-alkyle ; ou un groupe de formule (IIi) 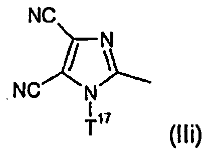 où T¹⁷ signifie cyanométhyle, benzyle ou allyle ; ou un groupe de formule (IIj)

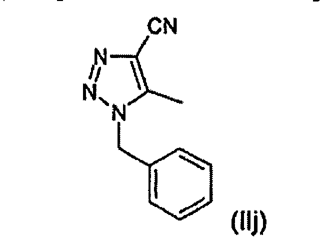

3. Colorant selon la revendication 1 et/ou 2,
**caractérisé en ce que**
R¹ représente hydrogène, chlore, méthyle, éthyle, méthoxy ou éthoxy ;
R² et R³ représentent, indépendamment l'un de l'autre, hydrogène, méthyle, éthyle, n-propyle, n-butyle, cyanoéthyle, -C₂H₄OCOCH₃, -C₂H₄OCOC₂H₄, -C₂H₄COOCH₃, - C₂H₄COOC₂H₅, méthoxyéthyle, éthoxyéthyle, phénoxyéthyle, phénéthyle, benzyle ou allyle ;
R⁶ représente hydrogène ;
R⁷ représente méthyle, éthyle, phényle, méthoxy, éthoxy, propoxy, vinyloxy, benzyloxy ou phénoxy ; et
L représente éthylène, propylène, butylène, éthénylène, buténylène, 1,3-phénylène, 1,4-phénylène ou -CH₂OCH₂-.

4. Colorant selon la revendication 1 et/ou 2, **caractérisé en ce qu'**il correspond à la formule générale (Ia) 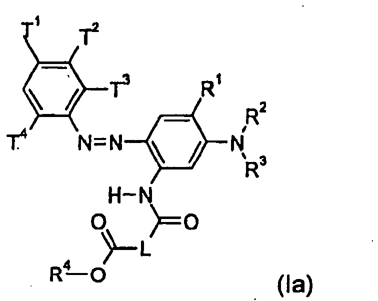 où T¹ à T⁴, R¹ à R⁴ et L sont définis comme indiqué dans la revendication 1.

5. Colorant selon la revendication 4, **caractérisé**
**en ce qu'**il correspond à la formule générale (Iaa) 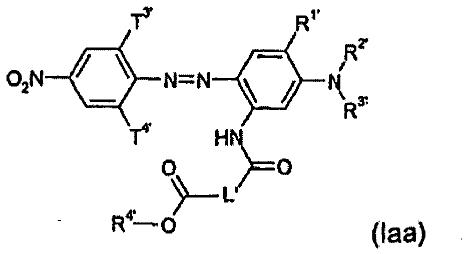 où
T^{3'} représente hydrogène, cyano, chlore ou brome ;
T^{4'} représente hydrogène, cyano, nitro, chlore ou brome ;
R^{1'} représente hydrogène ou méthoxy ;
R^{2'} représente hydrogène, éthyle, allyle ou méthoxyéthyle ;
R^{3'} représente éthyle, allyle, méthoxyéthyle ou cyanoéthyle ;
R^{4'} représente -CH₂COR^{7'} ou -CH=CH₂ ;
R^{7'} représente méthyle, éthyle, phényle, méthoxy, éthoxy ou vinyloxy ; et
L' représente éthylène, propylène, butylène, 1,3-phénylène, 1,4-phénylène ou -CH₂-O-CH₂-.

6. Colorant selon la revendication 1 et/ou 2, **caractérisé en ce qu'**il correspond à la formule générale (Ib) 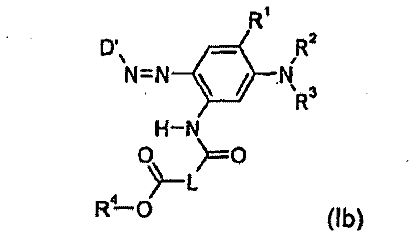 où R¹ à R⁴ et L sont définis comme indiqué dans la revendication 1 et D' représente 3,5-dicyano-4-chlorothiényl-2, 3,5-dicyanothiényl-2, 3,5-dicyano-4-méthylthiényl-2, 3-cyan-5-nitrothiényl-2, 3-cyano-4-chloro-5-formylthiényl-2, 3,5-dinitrothiényl-2, 3-acétyl-5-nitrothiényl-2, 5-acétyl-3-nitrothiényl-2, 3-((C₁-C₄)-alcoxycarbonyl)-5-nitrothiényl-2, 5-phénylazo-3-cyanothiényl-2, 5-(4-nitrophénylazo)-3-cyanothiényl-2, 5-nitrothiazoyl-2, 4-chloro-5-formylthiazolyl-2, 5-nitrobenzo-isothiazolyl-3, 7-bromo-5-nitrobenzo-isothiazolyl-3, 7-chloro-5-nitrobenzo-isothiazolyl-3, 3-méthyl-4-cyano-isothiazolyl-5, 3-phényl-1,2,4-thiadiazolyl-2, 5-((C₁-C₂)-alkylmercapto))-1,3,4-thiadiazolyl-2, 1-cyanométhyl-4,5-dicyano-imidazolyl-2, 6-nitrobenzothiazolyl-2, 5-nitrobenzothiazolyl-2, 6-thiocyanatobenzothiazolyl-2, 6-chlorobenzothiazolyl-2 ou (5),6,(7)-dichlorobenzothiazolyl-2.

7. Procédé pour la préparation d'un colorant de formule générale (I) selon la revendication 1, **caractérisé en ce qu'**on diazote un composé de formule générale (III)
D-NH₂ (III)
dans laquelle D est défini comme indiqué dans la revendication 1, et on couple sur un composé de formule générale (IV) 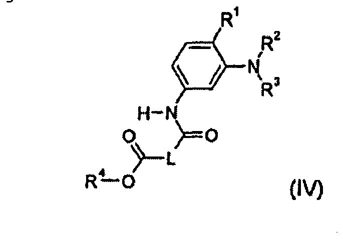 où R¹ à R⁴ et L sont définis comme indiqué dans la revendication 1.

8. Utilisation d'un colorant de formule générale I selon la revendication 1 pour la coloration et l'impression de matériaux hydrophobes.

9. Encre pour l'impression numérique sur textile selon le procédé par jet d'encre, **caractérisée en ce qu'**elle contient un colorant de formule générale (I) selon la revendication 1.
